Europäisches Patentamt

European Patent Office

Office européen des brevets

(19)

(11) EP 1 170 961 A1

(12) **EUROPEAN PATENT APPLICATION**
published in accordance with Art. 158(3) EPC

(43) Date of publication:
09.01.2002 Bulletin 2002/02

(51) Int Cl.7: **H04N 13/04**, G03B 35/18, G02B 3/00, G09F 9/00

(21) Application number: 99947896.9

(22) Date of filing: 14.10.1999

(86) International application number:
PCT/JP99/05669

(87) International publication number:
WO 00/59235 (05.10.2000 Gazette 2000/40)

(84) Designated Contracting States:
AT BE CH CY DE DK ES FI FR GB GR IE IT LI LU MC NL PT SE

(30) Priority: 26.03.1999 JP 8419699

(71) Applicant: Dohi, Takeyoshi
Tokyo 158-0091 (JP)

(72) Inventors:
• DOHI, Takeyoshi
  Setagaya-ku, Tokyo 158-0091 (JP)
• NAKAJIMA, Susumu
  Kawasaki-shi, Kanagawa 211-0954 (JP)
• SAKUMA, Ichiro
  Yokohama-shi, Kanagawa 240-0045 (JP)
• MASAMUNE, Ken
  Ota-ku, Tokyo 145-0063 (JP)
• ISEKI, Hiroshi
  Tokyo 116-0013 (JP)
• KOBAYASHI, Etsuko
  Hachioji-shi, Tokyo 192-0014 (JP)
• ORITA, Sumihisa
  Abiko-shi, Chiba 270-1121 (JP)

(74) Representative: Klocke, Peter, Dipl.-Ing. et al
Klocke & Späth Patentanwälte, Kappelstrasse 8
72160 Horb (DE)

(54) **THREE-DIMENSIONAL IMAGE DISPLAY**

(57) A three-dimensional image display device capable of forming images at a higher rate is provided by reducing amount of operation for forming images. The three-dimensional display device comprising: a convex lens array 2 where a plurality of convex lenses 2a are arranged, an image display means 3 arranged on or near a focal plane of the lens array 2, an operating means to calculate the farthest point $P_i$ from the image display means 3 among points intersecting the object image to be displayed, on a line L starting from a pixel on the image display means 3 passing through the center of the curvature of the convex surface of a plurality of said respective convex lens and heading toward the object image to be displayed in the predetermined three-dimensional space via center $C_j$ of the curvature of the convex surface of a plurality of respective convex lens 2a, and an image controlling means for instructing to display corresponding pixels $C_{ij}$ on the image display means 3 based on the image information $P_i$ calculated by the operating means. A light shielding plate 12 where a plurality of pin holes are arranged, can be employed in place of the lens array 2.

FIG.1

EP 1 170 961 A1

**Description**

Field of the Invention

The present invention relates to a three-dimensional image display device particularly applicable to the following fields.

① Medicine:

Diagnosis through images, Operation aid, Remote diagnosis, Informed consent etc.

② Advertisement:

Bill board, Product sample/display, Demonstration etc.

③ Art:

Art object, Painting, Graphic art, the Interior, Exhibition in art galleries/museums etc.

④ Entertainment:

Movie, Game, various Playing machines, Exhibition at attractions/theme pavilions and the like, Training and exercise in sports etc.

⑤ Information/Multi-media:

TV broadcast, TV conference, TV phone, Virtual reality, the Internet etc.

⑥ Simulation:

Driving exercise and operation planning for cars, airplanes, ships and space ships etc.

⑦ Design Aid:

Modeling, Strength test, Destruction test etc.

⑧ Educational aid:

Specimen of human bodies, Biological objects and DNA structures, Celestial bodies, Map etc.

⑨ Miscellaneous:

Book, Model, Toy, Souvenir etc.

Background of the Invention

Numerous display devices for displaying motion or still pictures in a space have been developed, but most of them show different pictures viewed from the right and left eyes so as to add stereo feeling to these pictures. In these devices, one image is not displayed in the space but taking a parallax into consideration, two different images viewed from right and left eyes are displayed in these devices so that observers can recognize these right and left eye views as one image, which merely gives observers stereo feelings.
Since the parallax is determined by a distance between right and left eyes, it is naturally different from each observer. Therefore when two different two-dimensional images are recognized as one three-dimensional image, but it is recognized differently by respective observers.
In the above-mentioned method where two different two-dimensional images are recognized as one three-dimensional image, observers merely observe the same one three-dimensional image from a different angle, but do not observe a different corresponding three-dimensional image from that angle.
In addition, since in the above-mentioned method different two-dimensional image having an artificial parallax viewed with right and left eyes are forcibly recognized as the three-dimensional image, there is a problem that observers are exhausted when observers try to recognize the three-dimensional image.

As a three-dimensional displaying method, which enables observers to recognize an image as a stereo image regardless of parallaxes, positions, observing directions, observing with one eye or two eyes of observers without using any special spectacles, enables to be used in circumstances where display devices are difficult in use and enables to be observed by other people simultaneously with one display device, integral photographic systems have been known.

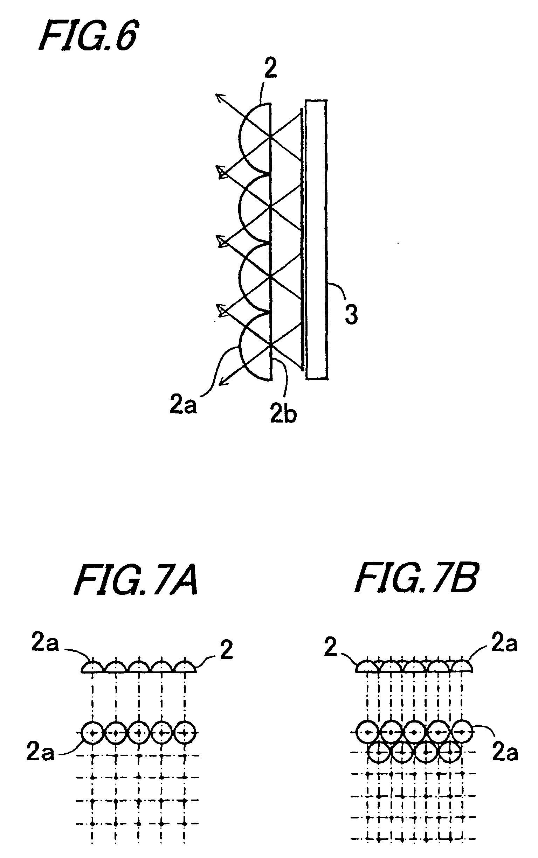

As shown in FIG.6 this method employs an image display means 3 arranged on the side of a surface 2b formed by center points of curvatures of convex surfaces of a convex lens array 2 where a plurality of convex lenses 2a are arranged, and employs an image forming means (not shown in the figure) to form images on the image display device. A liquid crystal display device, a Brown tube display device, a plasma display device, liquid crystal projector or a film projector with screen, or a printed image or developed film image etc. may be used as the image display means 3.

The convex lens array 2 comprises a plurality of convex lenses 2a and since it resembles a compound eye of an insect, it is called a fly eye lens plate or a compound eye lens. These convex lenses 2a may be arranged in a lattice configuration as shown in FIG.7A or arranged in a hexagonal configuration as shown in FIG.7B.

Object images shot by cameras and the like or computer generated two- or three-dimensional characters or graphics etc. can be used as objects to be displayed.

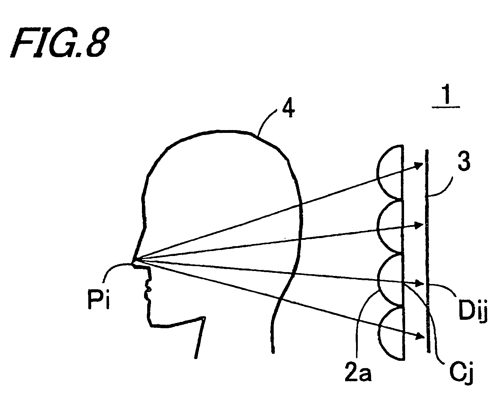

In order to form an image on the image display means 3 by calculation with the aid of an image forming means (not shown in drawings), a point on the image display means 3 formed by a projected light irradiated from a randomly selected point on an object image to be displayed in a predetermined three-dimensional space and passing through a center point $C_j$ of the curvature of the convex surface of the convex lens 2a, is calculated as shown in FIG.8. A projected image on the image display means is formed by repeating these calculations on all points on the object image to be displayed passing through center points $C_j$ of the curvatures of convex lenses 2a.

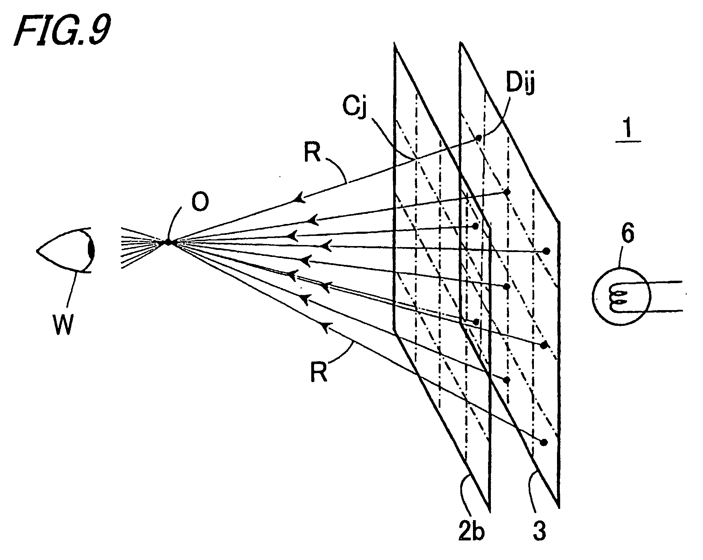

The projected image on the image display means 3, originated from the object image 4 to be displayed, which pass through the center points $C_j$ of curvatures of convex lenses 2a, is displayed for example on a liquid crystal display device and the projected image heads for a predetermined three-dimensional space when the image display means 3 is irradiated by a back light 6 from the right side as shown in FIG.9. A plurality of rays R corresponding to respective points to be projected in the three-dimensional space are converged one point to form a new light source O which an observer W can observe as a three-dimensional image.

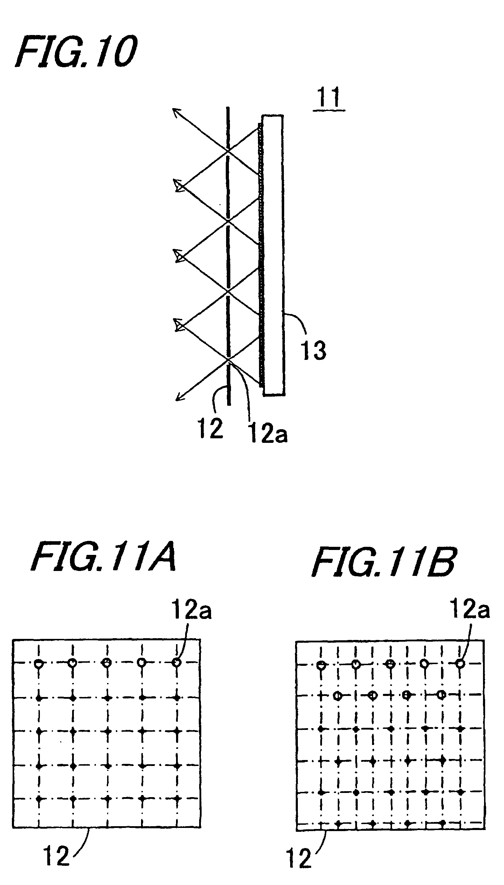

As shown in FIG.10, in place of the lens array, three-dimensional image display device 11 may comprise a light shielding plate 12 where a plurality of pin holes 12a, an image displaying means 13 arranged a predetermined distance from the light shielding plate 12 and an image forming means (not shown in FIG.10) for forming images on the image displaying means 13.

A plurality of pin holes 12a are perforated on the light shielding plate 12, where pin holes 12a may be arranged either in a lattice configuration as shown in FIG.11A or in a honey comb configuration as shown in FIG.11B.

The image can be also displayed in the predetermined three-dimensional space by utilizing the light shielding plate 12 in the same way as the above-mentioned convex lens array 2, by adjusting pin holes 12a at positions corresponding to curvature centers $C_j$ of the convex surfaces of convex lens 2a.

As a conventional art regarding the above-mentioned integral photography, the Japanese laid open patent No. 4-133049 discloses a method to record three-dimensional still images; where the convex lens array is used for displaying three-dimensional images and an XYZ plotter and recording media for recording three-dimensional still pictures on the recording media by moving a point light source mechanically, are disclosed.

The Japanese laid open patent No. 10-186275 where the above-mentioned integral photography is employed, discloses a three-dimensional display device capable of being manufactured easily, without having distinct respective lens marks, having excellent focusing performance and displaying three-dimensional images in a state keeping enough brightness. The three-dimensional display device has a feature that gaps among a plurality lens elements comprising a lens array, are shielded by light shielding members.

In these conventional three-dimensional display devices, images to be displayed on the image display means 3 are formed through calculations executed by the image forming means in a way shown in FIG.8. However, since the amount to be calculated correspond to a product of the number of points comprising the object image to be displayed in the predetermined three-dimensional space and the number of lenses on the lens array (or the number of pin holes on the light shielding plate) and, since an additional hidden surface process (a process to remove actually unobserved points) is necessary, a huge amount of calculation is required. Since moving pictures requires forming a lot of images at a high rate, a large scaled three-dimensional display device is required, consequently it requires a higher cost.

## Disclosure of the Invention

The present invention is carried out in view of the above-mentioned conventional problems so as to provide a three-dimensional display device capable of forming images at a high rate by remarkably reducing the amount of calculation.

Other objective of the present invention is to provide a three-dimensional display device with a large display screen and a three-dimensional display device capable of displaying more vivid images.

In order to attain the above-mentioned objectives, the three-dimensional display device according to the present invention comprises: the convex lens array where a plurality of convex lenses are arranged, the image display means arranged on or near a focal plane of the lens array; an operating means to calculate the farthest point from the image display means among points intersecting the object image to be displayed, on a line starting from each pixel on the image display means, passing through the center of the curvature of the convex surface of a plurality of respective convex lenses and heading toward the object image to be displayed in the predetermined three-dimensional space; and an image controlling means for instructing to display corresponding pixels on the image display means based on the image information calculated the operating means.

The three-dimensional display device according to the present invention comprises: the light shielding plate where a plurality of pin holes are arranged; the image display means arranged at the predetermined distance from the light shielding plate; the operating means to calculate the farthest point from the image display means among points intersecting the object image to be displayed, on a line starting from the pixel on the image display means, passing through a plurality of respective pin holes and heading toward the object image to be displayed in the predetermined three-dimensional space; and the image controlling means for instructing to display corresponding pixels on the image display means based on the image information calculated the operating means.

Since the amount to be calculated by the operating means is, for example, a product of pixels on the image display means and a resolution along a vertical direction of the object image to be displayed in the predetermined three-dimensional space, the amount to be calculated according to the present invention is capable of reducing to a large extent by employing the above-mentioned three-dimensional image display device. And since additional hidden surface process is simultaneously executed according to the present method, the amount to be calculated is further reduced so that images can be formed at a high rate.

When the convex lens array and the light shielding plate where pin holes are arranged, are compared, the latter is easier to manufacture, but the convex lens array is capable of accumulating light so that more bright images are obtained.

A three-dimensional display device having a constitution of a plurality of image display means and a plurality of the above-mentioned lenses or a constitution of a plurality of image display means and a plurality of the above-mentioned pin holes, namely, one image display means is arranged for a plurality of respective convex lenses or pin holes, can be arranged. In addition a plurality of the above-mentioned image display means can be arranged for one above-mentioned lens array or one light shielding plate.

Since a plurality of the image display means can be arranged in the three-dimensional image display device, a image display screen having any dimension can be attained so that a three-dimensional image display device having a large scaled screen can be provided.

A diffusing plate can be arranged between a point determined by lines irradiated from respective pixels of the image display means and passing through respective center points of the curvatures of the convex surfaces of a plurality of the convex lenses or respective pin holes intersect each other and a point where the observer's eyes are positioned.

By introducing the diffusing plate even when observer's eyes are not positioned on the lines irradiated from respective pixels of the image display means and passed through respective center points of the curvatures of the convex surfaces of a plurality of the convex lenses or respective pin holes, other points on the image display means not on the above mentioned lines are also observed so that a resolution of the projected image in the predetermined three-dimensional space is enhanced because an apparent size of pixels become smaller than a diameter of the convex lens or the pin hole.

Moving pictures can be displayed in the predetermined three-dimensional space by successively calculating with the operating means and successively instructing from the controlling means.

According to the present invention, since images can be formed at the high rate as mentioned above, more vivid images can be displayed even when the moving picture is displayed. An apparent resolution of the moving picture can be improved, since an afterimage effect of observers' eyes can be utilized.

Brief Description of Drawings

FIG.1 is a schematic diagram for explaining a calculating method by the operating means in a first embodiment of the three-dimensional display device according to the present invention.

FIG.2 is a schematic diagram for explaining the calculating method by the operating means in the first embodiment of the three-dimensional display device according to the present invention.

FIG.3 is a schematic diagram showing a second embodiment of the three-dimensional display device according to the present invention, where one convex lens is arranged to one image display means.

FIG.4 is a schematic diagram showing a third embodiment of the three-dimensional display device according to the present invention, where one pin hole is arranged to one image display means.

FIGs.5A and 5B are a schematic diagram showing a fourth embodiment of the three-dimensional display device according to the present invention, where FIG.5A shows the three-dimensional display device without the diffusing plate and FIG.5B shows the three-dimensional display device equipped with the diffusing plate.

FIG.6 is a schematic diagram showing a conventional embodiment of the three-dimensional display device employing the convex lens array where a plurality of convex lenses are arranged.

FIGs.7A and 7B are schematic diagrams showing configurations of convex lenses in the three-dimensional display device in FIG.6, where FIG.7A shows a lattice configuration and FIG.7B shows a honey comb configuration.

FIG.8 is a schematic diagram for explaining a forming method of object images to be displayed in the three-dimensional space in the conventional three-dimensional display device, projected on the image display means via convex lens array, by calculation.

FIG.9 is a schematic diagram for explaining a displaying method in the three-dimensional space by employing the conventional three-dimensional display device.

FIG.10 is a schematic diagram showing another conventional example of the three-dimensional display device employing the light shielding plate where a plurality of pin holes are arranged.

FIGs.11A and 11B are schematic diagrams showing configurations of convex lenses in the three-dimensional display device in FIG.10, where FIG.11A shows a lattice configuration and FIG.11B shows a honey comb configuration.

Detailed Description of Preferred Embodiments

Hereinafter embodied examples of the three-dimensional display devices according to the present invention are described by referring drawings.

As a first embodied example, a three-dimensional display device shown in FIG.6 comprising the lens array 2 where a plurality of convex lenses 2a are arranged and the image display means 3 arranged at the side of the surface 2b determined by center points of curvatures of convex surfaces of convex lenses 2a of the convex lens array 2 is explained.

In the same way as the conventional display devices, the liquid crystal display device, the Brown tube image display device, the plasma display device, the liquid crystal or film projector with the screen, or the printed or developed film image etc. can be employed as the three-dimensional display device 3. Two-dimensional or three-dimensional character or graphic images formed by photographs of real objects and computer graphics can be used as objects to be displayed.

In addition to the above-mentioned convex lens array 2 and image display means 3, the operating means and the image controlling means, both are not shown in the figure, are equipped in the three-dimensional display device according to the present invention.

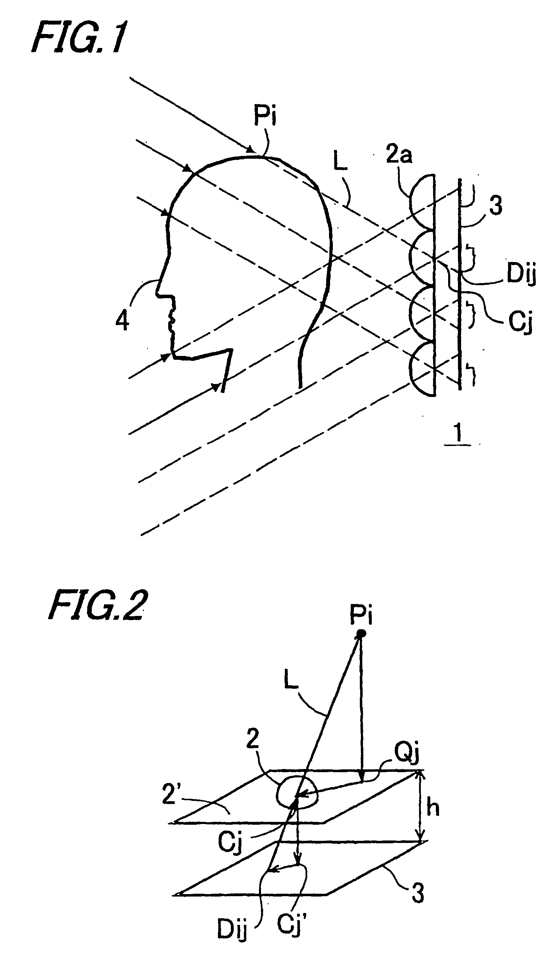

As shown in FIG.1, the operating means calculates a farthest point Pi from the three-dimensional display means 3 among points in an object image 4 to be displayed, on an intersecting straight line L starting from respective pixel Dij on the image display means 3, passing through respective center points Cj of the curvatures of respective convex surfaces of a plurality of convex lenses 2a and directing toward the object image 4 to be displayed. The image controlling means instructs to display image information of the point Pi calculated by the operating means, onto the corresponding pixel Dij of the image display means 3.

A whole image to be displayed on the image display means 3 is formed by executing the above-mentioned procedure over the whole pixels on the image display means 3.

FIG.2 is a schematic diagram showing a calculating method for selecting the farthest point Pi from the three-dimensional display means 3 among points in the object image 4 to be displayed, on the intersecting straight line L starting from respective pixel Dij on the image display means 3, passing through respective center points Cj of the curvatures of respective convex surfaces of a plurality of convex lenses 2a and directing toward the object image 4 to be displayed.

The image display means 3 is arranged below the convex lens array 2, where a distance between them is defined as "h" and a center point of the curvature of the convex surface of the convex lens 2a is defined as "Cj". It is assumed that the image to be displayed (corresponds to 4 in FIG.1) in the predetermined three-dimensional space is located above the convex lens array.

Here Pi is defined as the farthest point among points in the object image 4 to be displayed, on the intersecting straight line L starting from a pixel Dij on the image display means 3, passing through a center point Cj of a curvature of a convex surface of a convex lens 2a and directing toward the object image 4 to be displayed.

A toe of a perpendicular line to the surface 2b determined by center points of curvatures of convex surfaces of convex lenses 2a is defined as "Qj". And a toe of a perpendicular line from the center point Cj of the curvature of the convex surface of the convex lens 2a, to the image display means 3 is defined as "Cj'". Since a triangle CjCj'Dij and a triangle PiQjCj are similar figures, the following equation is derived:

$$CjQj : PiQj = DijCj' : h$$

Since DijCj' is determined by a geometrical relation between the lens array 2 and the image display means 3, when either CjQj or PiQj is measured, remaining either of them can be calculated.

When the object image 4 to be displayed is scanned by stepwise vertical planes from left side in FIG.1, Pi is determined by the relation between intersecting point in the object to be displayed formed by vertical planes and the above-mentioned straight line L. Thus, PiQj is derived from the determined Pi. Consequently, CjQj in FIG.2 can be calculated based on the above-mentioned equation from obtained PiQj.

When the above-mentioned operation is executed, the amount of operation by the operating means is a product of pixels on the image display means 3 and a resolution along a depth direction of the object image to be displayed in the three-dimensional space and the amount of the calculation is remarkably reduced compared with conventional ways because only actually observed points are calculated and hidden surface process is also executed simultaneously.

One example of apparatus to carry out the above-mentioned method, namely, an actual constitution of the operating means and the image controlling means, is a combination of CT (Computerized tomography) which takes three-dimensional tomographic images, and a personal computer which execute above-mentioned operation so as to obtain image data to be displayed on the three-dimensional image display means 3. When the convex lens array is placed in front of the liquid crystal display device used as the image display means 3 on which the obtained image data are displayed, the above-mentioned three-dimensional tomographic image is displayed in the predetermined three-dimensional space situated in front of the convex lens array.

In the same way as the conventional methods in place of the convex lens array, the light shielding plate 12 where a plurality of pin holes 12a are arranged as shown in FIG.10 can be used together with the above-mentioned operational means and the image controlling means so that the three-dimensional display device according to the present invention is constituted. Since effects of the pin holes 12a in place of the convex lens array 12 are the same as in the conventional methods, further explanation is omitted.

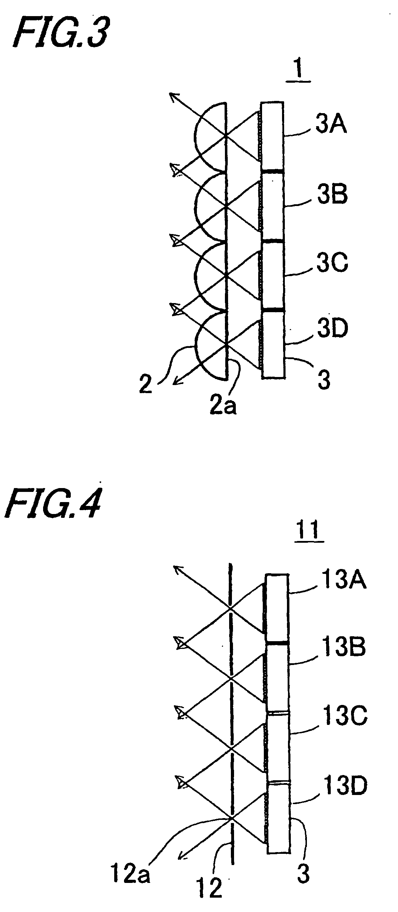

Hereinafter the second embodiment of the three-dimensional display device according to the present invention is explained by referring FIG.3.

In the above mentioned first embodiment one image display device is used for one convex lens array 2 where a plurality of convex lenses are arranged, but individual image display devices 3 (3A to 3D) are arranged respectively to a plurality of convex lenses 2a in this embodiment so that the three-dimensional display device 1 comprises a plurality of image display means 3 (3A to 3D) and a plurality of convex lenses 2a. When this arrangement is employed, an image display surface having desired size can be constituted and the three-dimensional image display device 3 having a large display screen can be provided.

As the third embodiment of the three-dimensional display device shown in FIG.4 according to the present invention, individual image display devices 13 (13A to 13D) are arranged respectively to a plurality of pin holes 12a so that the three-dimensional display device 11 comprises a plurality of image display means 13 (13A to 13D) and a plurality of convex lenses 12a, which attains the same effect as the second embodiment.

By arranging a plurality of image display means 3 (or 13) for at least one convex lens array 2 or light shielding plate 12 in stead of one to one arrangement of the convex lens 2 or the pin hole 12a for the image display means 3 (or 13) as described in the embodiments 2 and 3, an image display surface having desired size can be constituted and the three-dimensional image display device 3 having the large display screen can be provided.

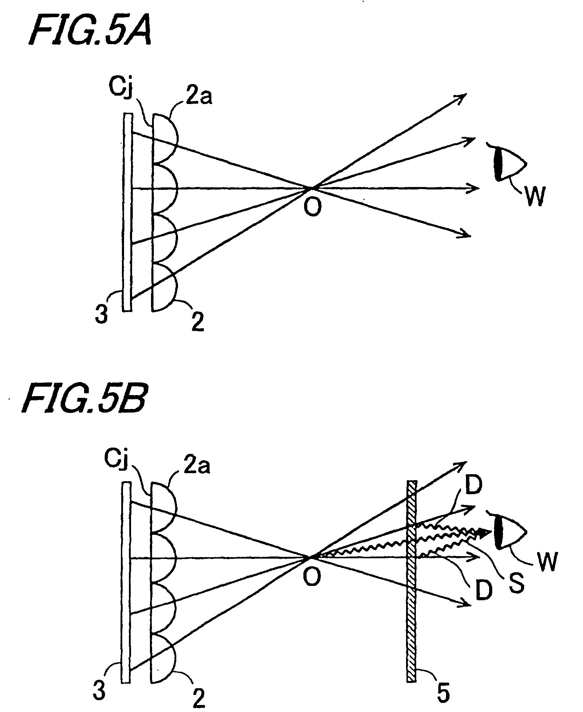

As shown in FIG.5B, a diffusing plate 5 such as a ground glass plate and the like is placed between a point O, where straight lines from respective pixels on the image display means 3 toward the object image to be displayed in the predetermined three-dimensional space via respective center points Cj of curvatures of convex surfaces of convex lenses 2a arranged on the lens array 2 intersect each other, and a position where observer W's eyes are located.

As shown in FIG.5A when the diffusing plate 5 is not placed, the observer W observes only points on the lines connected between observer W's eyes and respective center points Cj of curvatures of convex surfaces of convex lenses 2a so that only one pixel is observed for one convex lens 2a, consequently, an apparent pixel size corresponds to the diameter of the convex lens 2a.

On the other hand when the diffusing plate 5 is placed as shown in FIG.5B, the apparent pixel size looks smaller than the diameter of the convex lens 2a, which increase a resolution of a projector, because the observer W can observe other points not on the lines connected between observer W's eyes and respective center points Cj of curvatures of convex surfaces of convex lenses 2a, due to diffused lights which reach into observer W's eyes as synthesized lights S.

Although not shown in drawings, the above mentioned diffusing plate 5 can be used in the case of the light shielding plate 12 in place of the convex lens array 2. In this case, the apparent pixel size looks smaller than a pin hole spacing, which increase a resolution projected in the predetermined three-dimensional space, because through the diffusing plate 5 the observer W can observe other points not on lines from respective pixels on the image display means toward object image to be displayed in the predetermined three-dimensional space via a plurality of pin holes even when observer W's eyes are not on these lines.

Moving pictures can be displayed in the predetermined three-dimensional space when the calculation by the above-mentioned operating means and instructions by the image controlling means are successively executed. Since the residual image effects in the human eyes are attained by moving pictures, the apparent resolution can be improved.

As explained above, images can be formed at higher rate, since the amount of operation for forming images is remarkably reduced by the present invention compared with conventional methods. Due to reduced operating amount, a smaller scaled three-dimensional display device can be provided, as a result, a less expensive three-dimensional display device can be provided.

In addition to the above-mentioned effects the present invention is capable of constituting an image display screen having any desired size and providing the three-dimensional display device having a large scaled display screen.

Further, the apparent pixel size can be reduced to less than the diameter of the convex lens or the pin hole spacing, consequently the three-dimensional display device capable of attaining higher resolutions in images projected in the predetermined three-dimensional space can be provided.

The three-dimensional image display device capable of displaying more vivid moving pictures can be provided when the calculation by the operating means and instructions by the image controlling means are successively executed, because images can be formed at high rate even when moving pictures are displayed in the predetermined three-dimensional space.

The three-dimensional image display device according to the present invention can be applied to the following fields, can provide more vivid images and can provide less expensive systems.

① Medicine:

Diagnosis through images, Operation aid, Remote diagnosis, Informed consent etc.

② Advertisement:

Bill board, Product sample/display, Demonstration etc.

③ Art:

Art object, Painting, Graphic art, the Interior, Exhibition in art galleries/museums etc.

④ Entertainment:

Movie, Game, various Playing machines, Exhibition at attractions/theme pavilions and the like, Training and exercise in sports etc.

⑤ Information/Multi-media:

TV broadcast, TV conference, TV phone, Virtual reality, the Internet etc.

⑥ Simulation:

Driving exercise and operation planning for cars, airplanes, ships and space ships etc.

⑦ Design Aid:

Modeling, Strength test, Destruction test etc.

⑧ Educational aid:

Specimen of human bodies, Biological objects and DNA structures, Celestial bodies, Map etc.

⑨ Miscellaneous:

Book, Model, Toy, Souvenir etc.

AMENDMENT IN SPECIFICATION

[Received by the Japanese Patent Office on 23 October, 2000 together with the Demand for international preliminary examination]

Page 3, line 2, replace "other" with a lot of.

Page 4, line 8, replace "a new light source O" with a new apparent light spot O.

Page 5, line 10, insert not only on the surface but also including inside of the object after "the number of points".

Page 5 line 29 to page 6 line 4, replace "an operating means to calculate the furthest point from the image display means among points intersecting the object image to be displayed , on a line starting from each pixel on the image display means, passing through the center of the curvature of the convex surface of a plurality of the respective convex lenses" with an operating means to calculate only the furthest point from the image display means among points intersecting the object image to be displayed determined by the operating means, on a light starting from a pixel on the image display means, passing through only the center of the curvature of the convex surface of a plurality of the respective convex lenses among lights heading for a plurality of the convex lenses.

Page 6 lines 12-15, replace "the operating means to calculate the furthest point from the image display means among points intersecting the object image to be displayed, on a line starting from the pixel on the image display means, passing through a plurality of respective pin holes" with the operating means to calculate only the furthest point from the image display means among points intersecting the object image to be displayed determined by the operating means, on a light starting from the pixel on the image display means, passing through a plurality of respective pin holes among lights heading for the light shielding plate.

Page 6 line 21, insert including pixels not only on the surface but also after "a resolution".

Page 7 line 20, insert between the image displayed in the three-dimensional space and the observer after "By introducing the diffusing plate".

Page 11 line 23, delete "When the above-mentioned operation is executed," and replace "the amount" with The amount.

Page 11 line 26, replace "three-dimensional space and" with three-dimensional space, however, when the above-mentioned operation is executed,. using any special spectacles, enables to be used in circumstances where display devices are difficult in use and enables to be observed by a lot of people simultaneously with one display device, integral photographic systems have been known.

As shown in FIG.6 this method employs an image display means 3 arranged on the side of a surface 2b formed by center points of curvatures of convex surfaces of a convex lens array 2 where a plurality of convex lenses 2a are arranged, and employs an image forming means (not shown in the figure) to form images on the image display device. A liquid crystal display device, a Brown tube display device, a plasma display device, liquid crystal projector or a film projector with screen, or a printed image or developed film image etc. may be used as the image display means 3.

The convex lens array 2 comprises a plurality of convex lenses 2a and since it resembles a compound eye of an insect, it is called a fly eye lens plate or a compound eye lens. These convex lenses 2a may be arranged in a lattice configuration as shown in FIG.7A or arranged in a hexagonal configuration as shown in FIG.7B.

Object images shot by cameras and the like or computer generated two- or three-dimensional characters or graphics etc. can be used as objects to be displayed.

In order to form an image on the image display means 3 by calculation with the aid of an image forming means (not shown in drawings), a point on the image display means 3 formed by a projected light irradiated from a randomly selected point on an object image to be displayed in a predetermined three-dimensional space and passing through a center point Cj of the curvature of the convex surface of the convex lens 2a, is calculated as shown in FIG.8. A projected image on the image display means is formed by repeating these calculations on all points on the object image to be displayed passing through center points Cj of the curvatures of convex lenses 2a.

The projected image on the image display means 3, originated from the object image 4 to be displayed, which pass through the center points Cj of curvatures of convex lenses 2a, is displayed for example on a liquid crystal display device and the projected image heads for a predetermined three-dimensional space when the image display means 3 is irradiated by a back light 6 from the right side as shown in FIG.9. A plurality of rays R corresponding to respective points to be projected in the three-dimensional space are converged one point to form a new apparent light spot O which an observer W can observe as a three-dimensional image.

As shown in FIG.10, in place of the lens array, three-dimensional image display device 11 may comprise a light shielding plate 12 where a plurality of pin holes 12a, an image displaying means 13 arranged a predetermined distance from the light shielding plate 12 and an image forming means (not shown in FIG.10) for forming images on the image displaying means 13.

A plurality of pin holes 12a are perforated on the light shielding plate 12, where pin holes 12a may be arranged either in a lattice configuration as shown in FIG.11A or in a honey comb configuration as shown in FIG.11B.

The image can be also displayed in the predetermined three-dimensional space by utilizing the light shielding plate 12 in the same way as the above-mentioned convex lens array 2, by adjusting pin holes 12a at positions corresponding to curvature centers Cj of the convex surfaces of convex lens 2a.

As a conventional art regarding the above-mentioned integral photography, the Japanese laid open patent No. 4-133049 discloses a method to record three-dimensional still images, where the convex lens array is used for displaying three-dimensional images and an XYZ plotter and recording media for recording three-dimensional still pictures on the recording media by moving a point light source mechanically, are disclosed.

The Japanese laid open patent No. 10-186275 where the above-mentioned integral photography is employed, discloses a three-dimensional display device capable of being manufactured easily, without having distinct respective lens marks, having excellent focusing performance and displaying three-dimensional images in a state keeping enough brightness. The three-dimensional display device has a feature that gaps among a plurality lens elements comprising a lens array, are shielded by light shielding members.

In these conventional three-dimensional display devices, images to be displayed on the image display means 3 are formed through calculations executed by the image forming means in a way shown in FIG.8. However, since the amount to be calculated correspond to a product of the number of points not only on the surface but including inside of the object comprising the object image to be displayed in the predetermined three-dimensional space and the number of lenses on the lens array (or the number of pin holes on the light shielding plate) and, since an additional hidden surface process (a process to remove actually unobserved points) is necessary, a huge amount of calculation is required. Since moving pictures requires forming a lot of images at a high rate, a large scaled three-dimensional display device is required, consequently it requires a higher cost.

## Disclosure of the Invention

The present invention is carried out in view of the above-mentioned conventional problems so as to provide a three-dimensional display device capable of forming images at a high rate by remarkably reducing the amount of calculation.

Other objective of the present invention is to provide a three-dimensional display device with a large display screen and a three-dimensional display device capable of displaying more vivid images.

In order to attain the above-mentioned objectives, the three-dimensional display device according to the present invention comprises: the convex lens array where a plurality of convex lenses are arranged, the image display means arranged on or near a focal plane of the lens array; an operating means to calculate only the furthest point from the image display means among points intersecting the object image to be displayed determined by the operating means, on a light starting from a pixel on the image display means, passing through only the center of the curvature of the convex surface of a plurality of the respective convex lenses among lights heading for a plurality of the convex lenses and heading toward the object image to be displayed in the predetermined three-dimensional space; and an image controlling means for instructing to display corresponding pixels on the image display means based on the image information calculated the operating means.

The three-dimensional display device according to the present invention comprises: the light shielding plate where a plurality of pin holes are arranged; the image display means arranged at the predetermined distance from the light shielding plate; the operating means to calculate only the furthest point from the image display means among points intersecting the object image to be displayed determined by the operating means, on a light starting from the pixel on the image display means, passing through a plurality of respective pin holes among lights heading for the light shielding plate and heading toward the object image to be displayed in the predetermined three-dimensional space; and the image controlling means for instructing to display corresponding pixels on the image display means based on the image information calculated the operating means.

Since the amount to be calculated by the operating means is, for example, a product of pixels on the image display means and a resolution including pixels not only on the surface but also along a vertical direction of the object image to be displayed in the predetermined three-dimensional space, the amount to be calculated according to the present invention is capable of reducing to a large extent by employing the above-mentioned three-dimensional image display device. And since additional hidden surface process is simultaneously executed according to the present method, the amount to be calculated is further reduced so that images can be formed at a high rate.

When the convex lens array and the light shielding plate where pin holes are arranged, are compared, the latter is easier to manufacture, but the convex lens array is capable of accumulating light so that more bright images are obtained.

A three-dimensional display device having a constitution of a plurality of image display means and a plurality of the above-mentioned lenses or a constitution of a plurality of image display means and a plurality of the above-mentioned pin holes, namely, one image display means is arranged for a plurality of respective convex lenses or pin holes, can be arranged. In addition a plurality of the above-mentioned image display means can be arranged for one above-mentioned lens array or one light shielding plate.

Since a plurality of the image display means can be arranged in the three-dimensional image display device, a image display screen having any dimension can be attained so that a three-dimensional image display device having a large scaled screen can be provided.

A diffusing plate can be arranged between a point determined by lines irradiated from respective pixels of the image display means and passing through respective center points of the curvatures of the convex surfaces of a plurality of the convex lenses or respective pin holes intersect each other and a point where the observer's eyes are positioned.

By introducing the diffusing plate between the image displayed in the three-dimensional space and the observer even when observer's eyes are not positioned on the lines irradiated from respective pixels of the image display means and passed through respective center points of the curvatures of the convex surfaces of a plurality of the convex lenses or respective pin holes, other points on the image display means not on the above mentioned lines are also observed so that a resolution of the projected image in the predetermined three-dimensional space is enhanced because an apparent size of pixels become smaller than a diameter of the convex lens or the pin hole.

Moving pictures can be displayed in the predetermined three-dimensional space by successively calculating with the operating means and predetermined three-dimensional space is located above the convex lens array.

Here Pi is defined as the furthest point among points in the object image 4 to be displayed, on the intersecting straight line L starting from a pixel Dij on the image display means 3, passing through a center point Cj of a curvature of a convex surface of a convex lens 2a and directing toward the object image 4 to be displayed.

A toe of a perpendicular line to the surface 2b determined by center points of curvatures of convex surfaces of convex lenses 2a is defined as "Qj". And a toe of a perpendicular line from the center point Cj of the curvature of the convex surface of the convex lens 2a, to the image display means 3 is defined as "Cj'". Since a triangle CjCj'Dij and a triangle PiQjCj are similar figures, the following equation is derived:

$$CjQj : PiQj = DijCj' : h$$

Since DijCj' is determined by a geometrical relation between the lens array 2 and the image display means 3, when either CjQj or PiQj is measured, remaining either of them can be calculated.

When the object image 4 to be displayed is scanned by stepwise vertical planes from left side in FIG.1, Pi is determined by the relation between intersecting point in the object to be displayed formed by vertical planes and the above-mentioned straight line L. Thus, PiQj is derived from the determined Pi. Consequently, CjQj in FIG.2 can be calculated based on the above-mentioned equation from obtained PiQj.

The amount of operation by the operating means is a product of pixels on the image display means 3 and a resolution along a depth direction of the object image to be displayed in the three-dimensional space, however, when the above-mentioned operation is executed, the amount of the calculation is remarkably reduced compared with conventional ways because only actually observed points are calculated and hidden surface process is also executed simultaneously.

REFUTATION TO THE FIRST OPINION

The first opinion of the international preliminary examination stated that the calculating method for limiting lights passing through an aperture and center of curvature of a lens is merely a fundamental analytical procedure in the geometrical optics.

We admit the statement is as a matter of course and the above-mentioned calculating method itself can not constitute an invention.

The most important point in the present invention is the calculating method of the displayed image on the screen positioned at the opposite side of the respective lens on the lens array through which the three-dimensional image consisting of a set of huge amount of pixels including not only on the surface but also the depth direction of the object, pass and is projected onto the display screen.

In the conventional calculating method, at first intersecting points on the surface of the display screen positioned at the opposite side of the lenses, of the lights irradiated from center points of respective pixels, which consist three-dimensional image, passing through centers of lenses and projected on the display screen are calculated and then the hidden surface removal is executed so that it takes a long time before finishing the huge amount of calculation as follows.

Example of the conventional calculation

The object image: 1,000,000 voxels in the three-dimensional space of 256 $\times$ 256 $\times$ 256

The display means: a resolution of 1,000 $\times$ 1,000

The lens array 100 $\times$ 100 lenses

Amount of calculation: number of voxels $\times$ number of lenses

$$= 1,000,000 \times 100 \times 100 = 10,000,000,000$$

On the other hand the calculating method according to the present invention utilizes the fact that the display means consist a set of discontinuous pixels.

Namely, the calculating method according to the present invention is characterized: a line connecting the center of a pixel on the display means and the center of a lens, is extended toward the three-dimensional image, and is scanned from the three-dimensional image side repeatedly. Information regarding the first point where the scanned line intersecting the three-dimensional image of the object to be displayed, is displayed on the pixel on the display means. Amount of calculation is remarkably reduced in the present method.

Example of the calculation according to the present invention

Maximum amount of calculation on the same condition as the above conventional method: number of pixels on the display means $\times$ a resolution along the depth direction of the three-dimensional image data = 1,000 $\times$ 1,000 $\times$ 256 = 256,000,000 < < 10,000,000,000 (conventional method)

The Examiner's statement that calculating method for limiting lights passing through an aperture and center of curvature of a lens is merely a fundamental analytical procedure in the geometrical optics, indicates that the method is utilized not only in the present invention but also in the conventional calculation. Therefore it is needless to say that the method is not patentable.

**Claims**

1.    A three-dimensional display device comprising:

a convex lens array where a plurality of convex lenses are arranged,
an image display means arranged on or near a focal plane of said convex lens array,
an operating means to calculate the farthest point from said image display means among points intersecting an object image to be displayed, on a straight line starting from a pixel on said image display means passing through the center of the curvature of the convex surface of a plurality of said respective convex lens heading toward said object image to be displayed in the predetermined three-dimensional space, and
an image controlling means for instructing to display corresponding pixels on said image display means based on the image information calculated by said operating means.

2.    A three-dimensional display device comprising:

a light shielding plate where a plurality of pin holes are arranged,
an image display means arranged at a predetermined distance from the light shielding plate,
an operating means to calculate the farthest point from said image display means among points intersecting an object image to be displayed, on a straight line starting from a pixel on said image display means, passing through a plurality of said respective pin holes and heading toward said object image to be displayed in the predetermined three-dimensional space, and
an image controlling means for instructing to display corresponding pixels on said image display means based on the image information calculated by said operating means.

3.  The three-dimensional display device according to claim 1 or claim 2, wherein;

    a plurality of said image display means are respectively arranged for a plurality of said lenses or for a plurality of said pin holes, and
    said three-dimensional image display device comprises a plurality of said image display means and a plurality of said convex lenses or comprises a plurality of said image display means and a plurality of said pin holes.

4.  The three-dimensional display device according to claim 1 or claim 2, wherein:

    a plurality of said image display means are arranged for one said convex lens array or for one said light shielding plate.

5.  The three-dimensional display device according to either one of the clams 1 to 4, wherein:

    a diffusing plate is arranged between a point determined by lines from respective pixels of said image display means and passed through the center points of the curvatures of the convex surfaces of a plurality of said convex lenses or said pin holes intersect each other and a position where observer's eyes are located.

6.  The three-dimensional image display device according to either one of the claims 1 to 5, wherein:

    a moving picture is displayed in said predetermined three-dimensional space based on the successive calculation by said operating means and simultaneous successive instructions from said controlling means.


**Amended claims under Art.19.1 PCT**

1.  (Twice amended) A three-dimensional display device comprising:

    a convex lens array where a plurality of convex lenses are arranged,
    an image display means arranged on or near a focal plane of said convex lens array,
    an operating means to calculate only the farthest point from said image display means among points intersecting an object image to be displayed determined by said operating means including not only points on the surface but also in the depth direction of the object, on a light starting from a pixel on said image display means passing through only the center of the curvature of the convex surface of a plurality of said respective convex lens among lights heading for a plurality of said convex lenses and heading toward said object image to be displayed in the predetermined three-dimensional space, and
    an image controlling means for instructing to display corresponding pixels on said image display means based on the image information calculated by said operating means.

2.  (Twice amended) A three-dimensional display device comprising:

    a light shielding plate where a plurality of pin holes are arranged,
    an image display means arranged at a predetermined distance from the light shielding plate,
    an operating means to calculate only the farthest point from said image display means among points intersecting an object image to be displayed determined by said operating means including not only points on the surface but also in the depth direction of the object, on a light starting from a pixel on said image display means, passing through a plurality of said respective pin holes among lights heading for said light shielding plate and heading toward said object image to be displayed in the predetermined three-dimensional space, and
    an image controlling means for instructing to display corresponding pixels on said image display means based on the image information calculated by said operating means.

3.  The three-dimensional display device according to claim 1 or claim 2, wherein:

    a plurality of said image display means are respectively arranged for a plurality of said lenses or for a plurality of said pin holes, and
    said three-dimensional image display device comprises a plurality of said image display means and a plurality of said convex lenses or comprises a plurality of said image display means and a plurality of said pin holes.

4. The three-dimensional display device according to claim 1 or claim 2, wherein:

a plurality of said image display means are arranged for one said convex lens array or for one said light shielding plate.

5. The three-dimensional display device according to either one of the clams 1 to 4, wherein:

a diffusing plate is arranged between a point determined by lines from respective pixels of said image display means and passed through the center points of the curvatures of the convex surfaces of a plurality of said convex lenses or said pin holes intersect each other and a position where observer's eyes are located.

6. The three-dimensional image display device according to either one of the claims 1 to 5, wherein:

a moving picture is displayed in said predetermined three-dimensional space based on the successive calculation by said operating means and simultaneous successive instructions from said controlling means.

## FIG.1

## FIG.2

*FIG.3*

*FIG.4*

## FIG.5A

## FIG.5B

FIG.6

FIG.7A

FIG.7B

## FIG.8

FIG.9

## FIG.10

## FIG.11A

## FIG.11B

# INTERNATIONAL SEARCH REPORT

| International application No. |
|---|
| PCT/JP99/05669 |

| A. CLASSIFICATION OF SUBJECT MATTER |
|---|
| Int.Cl⁷ H04N13/04, G03B35/18, G02B3/00, G09F9/00 |

According to International Patent Classification (IPC) or to both national classification and IPC

| B. FIELDS SEARCHED |
|---|
| Minimum documentation searched (classification system followed by classification symbols)<br>Int.Cl⁷ H04N13/04, G03B35/18, G02B3/00, G09F9/00,<br>G02B27/22, G06T1/00-17/50, G09G5/36 |

Documentation searched other than minimum documentation to the extent that such documents are included in the fields searched
Jitsuyo Shinan Koho          1922-1996     Toroku Jitsuyo Shinan Koho  1994-1999
Kokai Jitsuyo Shinan Koho   1971-1999     Jitsuyo Shinan Toroku Koho  1996-1999

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | EP, 899969, A2 (Mixed Reallity Systems Laboratory Inc.),<br>03 March, 1999 (03.03.99),<br>Par. Nos. [0081]-[0087]; Figs. 11 to 15<br>& JP, 11-174377, A<br>Par. Nos. [0050]-[0056] | 1-6 |
| Y | JP, 2-82376, A (Fujitsu Limited),<br>22 March, 1990 (22.03.90),<br>page 2, upper right column, lines 3-12; Fig. 7<br>(Family: none) | 1-6 |
| Y<br>A | JP, 10-304402, A (SHIMIZU CORPORATION),<br>13 November, 1998 (13.11.98),<br>Par. No. [0014]   (Family: none) | 5,6<br>1-4 |

☐ Further documents are listed in the continuation of Box C.    ☐ See patent family annex.

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 December, 1999 (14.12.99) | 28 December, 1999 (28.12.99) |

| Name and mailing address of the ISA/<br>    Japanese Patent Office | Authorized officer |
|---|---|
| Facsimile No. | Telephone No. |

Form PCT/ISA/210 (second sheet) (July 1992)